(19) Europäisches Patentamt / European Patent Office / Office européen des brevets

(11) **EP 4 571 864 A1**

(12) **EUROPEAN PATENT APPLICATION**

(43) Date of publication:
18.06.2025 Bulletin 2025/25

(21) Application number: 23216959.9

(22) Date of filing: 15.12.2023

(51) International Patent Classification (IPC):
*H01M 4/04* (2006.01)          *B05C 5/02* (2006.01)
*B05D 1/26* (2006.01)          *C23C 14/56* (2006.01)
*H01M 4/139* (2010.01)          *H01M 4/36* (2006.01)

(52) Cooperative Patent Classification (CPC):
**H01M 4/0404; B05C 5/0254; B05C 9/06;**
**C23C 14/562; H01M 4/139; H01M 4/366;**
B05C 5/027; B05C 9/14; B05D 1/26; B05D 7/14;
B05D 7/5483; B05D 2252/02

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: CUSTOMCELLS Holding GmbH
25524 Itzehoe (DE)

(72) Inventor: **Paulus, Alexander**
**Itzehoe (DE)**

(74) Representative: **LKGLOBAL**
**Lorenz & Kopf Patentanwalt**
**Attorney at Law PartG mbB**
**Brienner Straße 11**
**80333 München (DE)**

(54) **A METHOD OF MANUFACTURING AN ELECTRODE**

(57)    The invention relates to a method (900) of manufacturing an electrode, the method (900) comprising conveying a substrate foil (110) in a conveying direction (120), applying a first coating layer (130) onto the substrate foil (110) with a first nozzle (140) and applying a second coating layer (160) onto the first coating layer (130) with a second nozzle (170).

Fig. 1

**Description**

FIELD OF THE DISCLOSURE

The present disclosure relates to a method of manufacturing an electrode, in particular for an energy storage device.

BACKGROUND

Batteries play a critical role in modern society, powering a wide range of devices from portable electronics to electric vehicles. The increasing demand for portable electronics and electric vehicles has led to a growing need for batteries with higher energy density, longer life-span, and improved safety. Furthermore, the shift towards renewable energy sources such as solar and wind power has increased the need for energy storage systems, making batteries an essential technology in the transition to a low-carbon economy.

Due to the importance of batteries, there is a high demand to improve the efficiency of battery production, in particular the production of battery electrodes as a part of lithium-ion batteries and lithium metal batteries. Battery electrodes are typically conductive materials that may serve as a positive or negative terminal in a battery.

In the context of electrode production, it has been established to coat a substrate film with an active material. The first step of coating usually involves mixing active materials and different components resulting in a coating mass known as slurry. Besides the active materials, the slurry may comprise a conductive additive (e.g. carbon black or carbon nanotubes), other additives, a binder (e.g. PVDF), and a solvent. The binder may ensure a cohesive electrode structure and the slurry's adhesion to the substrate film. The conductive additives' and the additives' task may be to increase the slurry's conductivity. The solvent may facilitate the even dispersion of active materials, conductive additives, binder, and other additives, ensuring a homogeneous slurry.

The mixing process of the slurry usually comprises a step of dry mixing and a subsequent step of wet mixing. Dry mixing, using low or high energy, aim to thoroughly cover active materials with carbon black. Subsequently, wet mixing with solvent forms the slurry, initially agglomerated but may be made homogeneous through thorough stirring. Diverse mixing systems, techniques, temperatures, and stringent requirements may ensure quality. The slurry may meet specific parameters for homogeneity and viscosity for a safe coating process, considering changes over time that require rapid processing.

In a further step, the substrate film may be coated with the paste-like or almost liquid slurry using an application tool (e.g. slot die, doctor blade, anilox roller). After coating, the substrate film may pass through a drying channel. The solvent is removed from the slurry by applying heat in the drying channel.

The demand for lithium-ion batteries, especially for electric vehicles, requires higher energy capacities, cost efficiency and faster charging options. Increasing the electrode thickness is a viable strategy to improve the energy capacity of cells while reducing costs. This beneficial result comes from increasing the proportion of active material relative to inactive material within the cell. However, a higher load often results in less movement of the lithium-ions (Li-ions) across thicker electrodes. Less ion movement leads to significant fluctuations in lithium concentration from the separator to the current collector, which can limit the usable capacity of the electrodes and promote irreversible lithium plating.

Enhancing ion movement within electrodes, in particular within the active material, has been achieved through the development of pore networks, notably reducing electrode tortuosity and thereby improving both energy density and rate performance. Researchers have explored diverse techniques to engineer electrode structures featuring voids or larger pores customized to enhance electrolyte penetration and Li-ion transport. These methods encompass magnetic particle alignment, co-extrusion, controlled mud-cracking, freeze casting, and the inclusion of pore formers. Notably, the use of short-pulsed lasers has emerged to create micropores or channels within various Li-ion battery electrodes. These laser-patterned microstructures establish efficient pathways for Li-ion movement throughout the electrode, curbing electrolyte concentration discrepancies and lowering the electrochemical overpotentials that can lead to lithium plating.

However, these methods have proven to be disadvantageous in many respects.

Methods utilizing laser treatment have shown promise in laboratory settings, as outlined in the following literature:

Kriegler, Johannes, Lucas Hille, Sandro Stock, Ludwig Kraft, Jan Hagemeister, Jan Bernd Habedank, Andreas Jossen, and Michael F. Zaeh. "Enhanced performance and lifetime of lithium-ion batteries by laser structuring of graphite anodes." Applied Energy 303 (2021): 117693. and

Dunlap, Nathan, Dana B. Sulas-Kern, Peter J. Weddle, Francois Usseglio-Viretta, Patrick Walker, Paul Todd, David Boone et al. "Laser ablation for structuring Li-ion electrodes for fast charging and its impact on material properties, rate capability, Li plating, and wetting." Journal of Power Sources 537 (2022): 231464.

However, these methods have not yet made the transition to industrially applicable cell formats and their associated production framework.

US20220263060A1 describes a method to utilizing laser ablation to selectively remove regions of active material from lithium-ion battery electrodes during production, forming channels. However, the laser ablation may cause debris and impurities, which has to be removed by a gas source.

Furthermore, CN111710833B describes a method of pattern engraving treatment on the surface of the current collector by adopting a laser and spraying slurry on the surface of the current collector. However, with this method the pattern or structure of the active material in the electrode may be difficult to control because the treatment of the current collector affects the active material only in an indirect manner.

SUMMARY OF THE DISCLOSURE

Currently, it remains desirable to overcome the aforementioned problems and in particular to provide a system for manufacturing an electrode with an increased energy capacity, wherein manufacturing does not lead to debris or impurities.

Therefore, a method of manufacturing an electrode is provided. The method comprises conveying a substrate foil in a conveying direction. Furthermore, the method comprises applying a first coating layer onto the substrate foil with a first nozzle, wherein the first nozzle is located at a first distance from the substrate foil. The method also comprises applying a second coating layer onto the first coating layer with a second nozzle, wherein the second nozzle is located at a second distance from the substrate foil. The second nozzle is located behind the first nozzle in a conveying direction and the second nozzle has a lower flow rate of applied coating material than the first nozzle. The second distance is greater than the first distance.

By providing such a method, the limitations of conventional techniques (as e.g. described above) may be overcome by minimizing debris or impurities in electrodes. The method may allow for an uneven and/or locally concentrated distribution of the second coating layer by applying the second coating layer onto the first coating layer.

In particular, the created uneven and/or locally concentrated distribution of the second coating layer can lead to cavities or voids in the second coating layer (i.e. between the local concentrations). More generally, the created uneven and/or locally concentrated distribution of the second coating layer or the caused cavities may be referred to as a structured second coating layer or in still other words, as a coating pattern. The coating pattern may be hence defined by areas on the first coating layer where the second coating material is present and other areas where no second coating material is present.

According to the present disclosure, this structure is obtained by at least one of the particular system settings (a) and (b), best a combination of them: (a) the second nozzle has a lower flow rate of applied coating material than the first nozzle, and (b) The second distance is greater than the first distance. Specifically, surface tension of the coating material can lead to a coating pattern and consequently to gaps (i.e.cavities), in particular, since the second nozzle is more distanced and ejects less coating material per conveyed substrate foil, such that the second coating layer cannot completely cover the surface of first coating layer.

It may be desirable to create as many cavities in the second coating layer as possible. Moreover, the method may have the potential to eliminate the need of any other process steps to produce uneven distributions or cavities in the second coating layer. The disclosed methods may potentially be faster than conventional methods requiring additional steps like a laser treatment, which may result in a reduction of energy and material demand.

The combination of the substrate foil and the applied (and dried) first coating layer and second coating layer may be termed the coated electrode or, more broadly, referred to simply as the electrode.

The first coating layer or the second coating layer may comprise a metal containing materials or a mixture of metals. The used metals, for example, may comprise e.g. lithium, sodium, magnesium, aluminum, potassium and/or calcium. Typically, the coatings may not contain metals in the metallic state. Instead, metal mixed oxides (e.g. in a transition state) may be used for the cathode and graphite or silicon derivatives the anode. The thickness of the first coating layer or first coating layer may be greater than or equal to $40 \, \mu m$ to less than or equal to $200 \, \mu m$, optionally less than or equal to $120 \, \mu m$, and in certain variations, optionally less than or equal to $60 \, \mu m$. The coated electrode may have an electrode thickness of $1 \, \mu m$ to $500 \, \mu m$, more preferably up to $200 \, \mu m$.

The coated electrode, in particular its first coating layer and second coating layer, may serve as an active material for the battery. During the operation of the battery, the active layer may be the material that may undergo a reversible electrochemical reaction during the charge and discharge process. In other words, the coated electrode or active material may be the substance that may participate in the electrochemical reactions producing the flow of electrons within the battery.

The active material, for example, for a negative battery electrode foil (i.e, anode), may comprise silicon, silicon oxides, carbon material, combinations thereof, and composites thereof. For example, the active material may comprise a silicon suboxide-carbon ($SiOx/C$, $1 \leq x \leq 2$) composite. Silicon suboxide-carbon ($SiOx/C$, $1 \leq x \leq 2$) composite is just one example of an active material. The examples of the active material of the positive battery electrode foil (i.e., cathode) in, for example, Li-ion batteries, include lithium cobalt oxide, lithium manganese oxides, lithium iron phosphate, lithium manganese iron phosphates, lithium nickel manganese cobalt oxide, lithium titanium oxide and lithium cobalt aluminum oxide. The active material of the battery electrode foil may be chosen to guarantee a good electrical conductivity, high thermal stability, and low resistance.

The substrate foil may be a sheet, base or underlying material onto which the first coating layer, the second coating layer or layer of another material may be applied. In the case of the coated electrode, the substrate foil may refer to the core or base material of the electrode onto which a specific electrode coating material may be applied to achieve certain properties or functions, such as enhanced conductivity, corrosion resistance, or catalytic activity. The first coating layer or second coating layer may be an additional layer that, for example, may modify the substrate foil's surface properties or provide specific characteristics to the electrode for its intended application.

The substrate or substrate foil may serve as a positive current collector or a negative current collector. In case the substrate foil serves as a positive current collector (i.e. for the cathode), the substrate foil may be an aluminum foil, typically 15 to 20 $\mu$m thick. Aluminum may have a high conductivity and it may be rather stable even at the high potential of the positive electrode. In case the substrate foil serves as a negative current collector (i.e. for the anode), the substrate may be a copper foil, typically 8 to 18 $\mu$m thick. Aluminum would be lighter and cheaper but it may not be used at the low potential of the negative electrode due to parasitic formation of a lithium/aluminum alloy.

The substrate foil may comprise a conductive material. The conductive material may comprise, for example, copper, aluminum, nickel-coated copper foil, aluminum-coated copper foil, stainless steel foil, and/or copper-zinc alloy foil. The substrate may be a base foil and/or a mesh, such as a metal mesh. The substrate foil may be based on fiberglass with a metallic coating.

The (first and second) nozzle may typically refer to a specialized tool or device used in manufacturing processes, especially for the application of a coating layer. Accordingly, the nozzle may comprise a narrow, elongated opening, through which materials, such as coating material or slurry, are extruded or forced through to create a specific shape or form. The opening of a die may also be referred to as a nozzle. For the manufacturing of electrodes, dies or nozzles may be commonly used in the production of films, sheets, fibers, or other products where precise control over the width and thickness of the output may be required.

The flow rate of a nozzle may refer to the volume or quantity of fluid (such as liquid coating material) passing through the nozzle per unit of time. The flow rate may measure the rate at which the coating material is discharged or expelled from the nozzle, typically expressed in units such as liters per minute (L/min). The flow rate may be influenced by factors like the nozzle's size, shape, pressure, and the properties of the coating material being dispensed.

The second coating layer may intentionally be adjusted (i.e. increased second distance and reduced flow rate) to deliberately create flaws (voids) within the second coating layer. Specifically, surface tension may lead to a coating pattern and consequently to gaps.

When the first coating layer reaches the substrate foil, the first coating layer may create a seamless, smooth, and opaque layer. That may mean the substrate foil may continuously be coated with a slurry or a coating material to obtain the first coating layer. When the second coating layer reaches the first coating layer, the surface tension in the first coating layer and/or second coating layer might cause variations or an uneven pattern in the second coating layer. This irregular distribution in the second coating layer may possibly lead to an uneven or nonuniform coating of the electrode. In simpler terms, the application of the second coating layer onto the first coating layer might result in areas where the coating is thicker or thinner than desired, creating an unevenness or lack of uniformity in the layer of active electrode material on the substrate foil. Furthermore, the application of the second coating layer onto the first coating layer might result in a structured arrangement of cavities in the second coating layer.

The cavities may improve the overall integrity and performance of the electrode by potentially affecting conductivity, active material distribution, and the electrode's electrochemical properties. The cavities (also referred to as holes or channels) within the electrode coating may be designed to serve as ion transport pathways. The ion transport pathways or voids may be intended to facilitate better penetration of ions, especially in thicker electrodes. The ion transport pathways may enhance the movement of ions through the electrodes, which may be more challenging in thicker electrodes due to increased diffusion distances. By introducing ion transport pathways or voids during the manufacturing process, the goal may be to create more accessible and efficient routes for ions to move into and out of the electrode coating material, thereby possibly improving the overall performance and efficiency of the battery or electrochemical device. The ion transport pathways may strategically be designed to optimize ion diffusion, in particular the diffusion of lithium ion, and promote better electrochemical performance in thicker electrode structures. However, it has been found that generally an uneven and/or locally concentrated distribution of the second coating layer can lead can allow an enhanced ion transport into the first coating layer, and thus can increase the energy capacity of the electrode.

The cavities or ion transport pathways may have a diameter of less than or equal to 200 $\mu$m, more preferably less than or equal to 100 $\mu$m and in certain variations, optionally less than or equal to 50 $\mu$m.

In one aspect, the first nozzle may be configured to apply the first coating layer with a first thickness and the second nozzle may be configured to apply the second coating layer with a second thickness.

In other words, the first nozzle may be set up or designed to apply the first coating layer with a specific thickness referred to as the first thickness. Similarly, the second nozzle may be arranged or adjusted to apply a subsequent coating layer known as the second coating layer with a distinct thickness identified as the second thickness. Essentially, each nozzle may be tailored or adjusted to dispense coatings of different thicknesses onto the substrate foil or (in terms of the second nozzle) on the first coating layer.

In one aspect, the first distance may be 1.1 to 2 times of the first thickness. Furthermore, the second distance may correspond to the sum of first thickness and n times the first distance n being more than 1. Furthermore, the second distance may correspond to the sum of first thickness and m times the second thickness m being more than 1.1, in particular more than 2.

The formulation might be represented mathematically in the following manner:

$$\text{first distance} \ = \ 1.1\ldots2 \cdot \ \text{first thickness}$$

or

$$\text{second distance} \ = \ \text{first thickness} + \text{n} \cdot \text{first distance,}$$

wherein n > 1 or

$$\text{second distance} \ = \ \text{first thickness} + \text{m} \cdot \text{second thickness,}$$

wherein m > 1.1, in particular m > 2.

In one aspect, a surface of the substrate foil may be curved when facing the first nozzle and/or when the first coating layer may be applied. Furthermore, a surface of the applied first coating layer may be curved when facing the second nozzle and/or when the second coating layer may be applied.

In other words, the curvature may occur on the surface of the substrate foil or the first coating layer. The substrate foil, or the region where the first coating layer may be deposited, might not have a completely flat or planar surface but may have some form of curvature, in particular a convex curvature, when interacting with the first nozzle or during the application of the first coating layer. The first coating layer, or the region where the second coating layer may be deposited, might not have a completely flat or planar surface but may have some form of curvature, in particular a convex curvature, when interacting with the second nozzle or during the application of the second coating layer.

In one aspect, the surface of the substrate foil or the applied first coating layer may be curved by deflecting the substrate foil over a roller. The first coating layer and/or the second coating layer may be applied at a section along the conveying direction where the roller may be located.

By guiding the substrate foil over a roller, the material may undergo a bending action, resulting in a curved or bent surface. This bending process may affect either the substrate foil itself and/or the layer applied onto it (i.e. the substrate foil comprising the applied first coating layer may be bent), such as the applied first coating layer, causing a change in the surface's flatness to create a curve. The first coating layer, the second coating layer, or both layers may be applied at a specific segment along the path of material conveyance, precisely where the roller is positioned. In other words, the conveying path of the substrate foil may comprise a section, where the substrate foil may be deflected by the roller. At this (deflection) section, the first and/or second coating layer may be applied to the substrate foil by the first and/or second nozzle. The application of these layers may occur at a particular section of the conveying direction, coinciding with the location of the roller.

In one aspect, a slurry may be used to form the first coating layer and/or the second coating layer. The slurry may comprise an active electrode coating material and another material such as a binder, a solvent, an additive, and/or a conductive agent. Optionally, at least the slurry used for the second coating layer further may comprise ethanol for decreasing the surface tension of the first coating layer or the second coating layer.

Ethanol may be only an example of a substance to decrease the surface tension. It is also possible that the first coating layer and the second coating layer may require completely different solvents (hydrophilic or hydrophobic).

Both, the first coating layer and the second coating layer may be a slurry. Both slurries may differ in components that change the surface tension in relation to each other.

The slurry may refer to a thick, semi-liquid mixture typically composed of solid particles suspended in a liquid. The slurry may be a non-compressible suspension. The slurry may be provided in a slurry reservoir. The slurry reservoir may refer to a containment or storage area designed to hold the slurry. The slurry reservoir may be engineered to handle the specific properties of the slurry, including their density, viscosity, and flow characteristics, ensuring proper storage and controlled dispensing when needed for operations. The slurry reservoir may comprise a mixing unit configured to mix electrode coating material, electrical conductive agents (e.g. carbon black or carbon nanotubes), binding agents (e.g. PVDF), additives, and/or solvents to form a slurry. After the slurry has been applied to the substrate foil, the slurry may be dried to form a coating on the substrate foil.

In one aspect, the first coating layer and the second coating layer may be applied by a double slot die, the double slot die comprising the first nozzle and the second nozzle. The double slot die may be positioned and inclined in relation to the substrate foil such that the second distance may be greater than the first distance.

In one aspect, at least partially heating, drying and/or irradiating the first coating layer before the second coating layer may be applied onto the first coating layer.

The treatment heating, drying and/or irradiating may occur partially, implying that it might not completely dry the first coating layer but only the surface of the first coating layer. The purpose of this treatment may be to modify the condition or properties of the first coating layer in such a way that it may enhance the formation of cavities in the second coating layer. The desired effect of creating cavities may be controlled or easiest to adjust if the first coating layer is dry before the second coating layer is applied.

In one aspect, the first coating layer may be at least partially in a liquid state when the second coating layer may be applied.

The present disclosure also relates to a system for manufacturing an electrode. The system comprises a conveyor device configured to convey a substrate foil in a conveying direction, a first nozzle configured to apply a first coating layer onto the substrate foil, wherein the first nozzle is locatable at a first distance from the conveyed substrate foil, and a second nozzle configured to apply a second coating layer onto the first coating layer. The second nozzle is locatable at a second distance from the conveyed substrate foil. The second nozzle is located behind the first nozzle in a conveying direction and wherein the second nozzle has a lower flow rate of applied coating material than the first nozzle. The second distance is greater than the first distance.

The substrate foil may be conveyed from a first position, where the first coating layer is applied, to a second position, where the second coating layer is applied, e.g. in a predefined time. The predefined time may be equal or less than 2 seconds, 1 second, or 0.5 second.

In one aspect, the system may comprise a roller configured to deflect the substrate foil to curve the surface of the substrate foil facing the first nozzle and/or the applied first coating layer facing the second nozzle. The first nozzle and/or the second nozzle may be arranged at a section along the conveying direction, whereof the roller is located.

A roller configured to deflect the substrate foil may refer to a specialized roller designed to bend or alter the shape of the substrate foil as it may pass over or through the roller's surface.

In one aspect, the system may comprise a radiation dryer positioned between the first nozzle and the second nozzle. The radiation dryer may be configured to partially dry the first coating layer, in particular to dry a surface of the first coating layer, before the second coating layer may be applied onto the first coating layer.

The radiation dryer may be configured to partially or fully dry the first coating layer.

In one aspect, the system may further comprise an applicator device comprising a housing enclosing the first nozzle and the second nozzle. The system may also comprise a double slot die comprising the first nozzle and the second nozzle. Optionally, the applicator device or the double slot die may be positioned and inclined in relation to the conveyed substrate foil such that the second distance is greater than the first distance.

The applicator device may have the shape of a slot-die (also referred to as a slit die). The applicator device may comprise a double-slot nozzle, for example, or any other design comprising two nozzles. Furthermore, the applicator device may have a housing with a first nozzle and a second nozzle configured to eject the slurry. The applicator device may have a supply port on another side configured to receive slurry from the slurry reservoir.

In one aspect, the first nozzle may be spaced at a distance of less than 20cm, in particular less than 10cm or 5cm, from the second nozzle.

In one aspect, the first nozzle may comprise a first nozzle opening and the second nozzle may comprise a second nozzle opening. The width of the first nozzle opening may be substantially equal to the width of the second nozzle opening and/or the width of the first nozzle or width of the second nozzle may be substantially equal to the width of the substrate foil.

For example, the width of the substrate foil may be 460 mm, but the width of the first nozzle or second nozzle may be 400 mm.

The width direction of the opening may correspond to a width direction of the housing. The height direction of the opening may correspond to a height direction of the housing. The length direction of the housing may be perpendicular to the width direction and the height direction of the housing. The housing may have substantially the form of a flat cuboid, wherein one small side of cuboid is the slit formed opening. The two large main side may be in the main plane of the housing or the slot-die. These main sides may be provided by the inner main walls of the housing.

The relatively large width of the slit shaped opening may be predetermined as a function of a width of the electrode, in particular by considering one or several uncoated areas for contact tabs of the electrode. The width direction of the electrode tape may be perpendicular to the conveying direction, i.e. the length direction of the electrode tape.

The slurry may be applied on both sides of the substrate foil. This approach may refer to double-sided (or two-sided) coating. Double-sided coating may comprise the simultaneous application of an electrode coating material from both the top and bottom of a substrate foil. Alternatively, it may involve a sequential process where the substrate foil may initially be coated from the top side, followed by a step where the substrate foil may be flipped, and the reverse side is subsequently coated from the top.

It is intended that combinations of the above-described elements and those within the specification may be made, except where otherwise contradictory.

It is to be understood that both the foregoing general description and the following detailed description are exemplary and explanatory only, are provided for illustration purposes and are not restrictive of the disclosure, as claimed.

The accompanying drawings, which are incorporated in and constitute a part of this specification, illustrate examples of the disclosure and together with the description, and serve to support and illustrate the principles thereof.

BRIEF DESCRIPTION OF THE DRAWINGS

Fig. 1 schematically shows a system 100 for manufacturing an electrode comprising a first nozzle 140 and a second nozzle 170 in a side view according to examples of the present disclosure.

Fig. 2 schematically shows the system 100 with an applicator device 200 comprising a housing 210 enclosing the first nozzle 140 and the second nozzle 170 according to examples of the present disclosure.

Fig. 3A schematically shows the system 100 for manufacturing an electrode comprising a roller 300 according to examples of the present disclosure.

Fig. 3B schematically shows the system 100 of Fig. 3A in a plan view according to examples of the present disclosure.

Fig. 3C schematically shows a system 100 similar to the system of fig. 3B, comprising an inclined applicator device according to examples of the present disclosure.

Fig. 4 schematically shows the applicator device 200 with the first nozzle 140 and the second nozzle 170 inward-facing according to examples of the present disclosure.

Fig. 5 schematically shows the system 100 with the applicator device 200 of Fig. 4 to examples of the present disclosure.

Fig. 6A shows a schematic drawing of a coated electrode 600 in a side view according to examples of the present disclosure.

Fig. 6B shows a schematic drawing of a coated electrode 600 in a plan view according to examples of the present disclosure.

Fig. 7 shows a schematic drawing of a two-side coated electrode 600 according to examples of the present disclosure.

Fig. 8 shows a schematic drawing of a lithium-ion battery 800 during discharging with an anode 810 and a cathode 820 according to examples of the present disclosure.

Fig. 9 schematically shows a method 900 of manufacturing an electrode 600 according to examples of the present disclosure.

DESCRIPTION OF THE DRAWINGS

Reference will now be made in detail to examples of the disclosure, examples of which are illustrated in the accompanying drawings. Wherever possible, the same reference numbers will be used throughout the drawings to refer to the same or like parts.

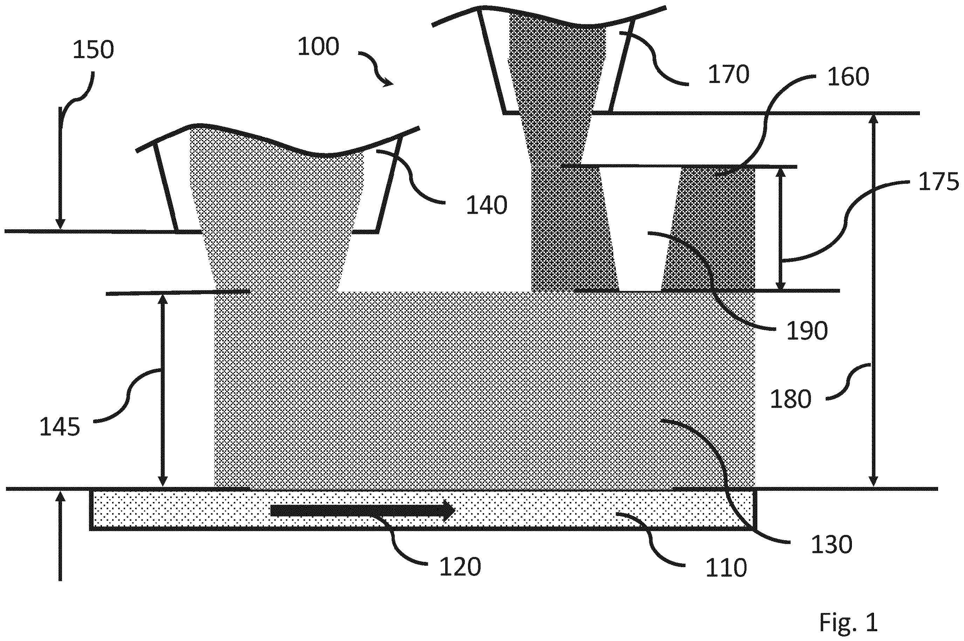

Fig. 1 schematically shows a system 100 for manufacturing an electrode comprising a first nozzle 140 and a second nozzle 170 in a side view according to examples of the present disclosure.

The system 100 comprises a conveyor device configured to convey a substrate foil 110 in a conveying direction 120. The system 100 comprises a first nozzle 140 configured to apply a first coating layer 130 onto the substrate foil 110. Furthermore, the system 100 comprises a second nozzle 170 configured to apply a second coating layer 160 onto the first coating layer 130.

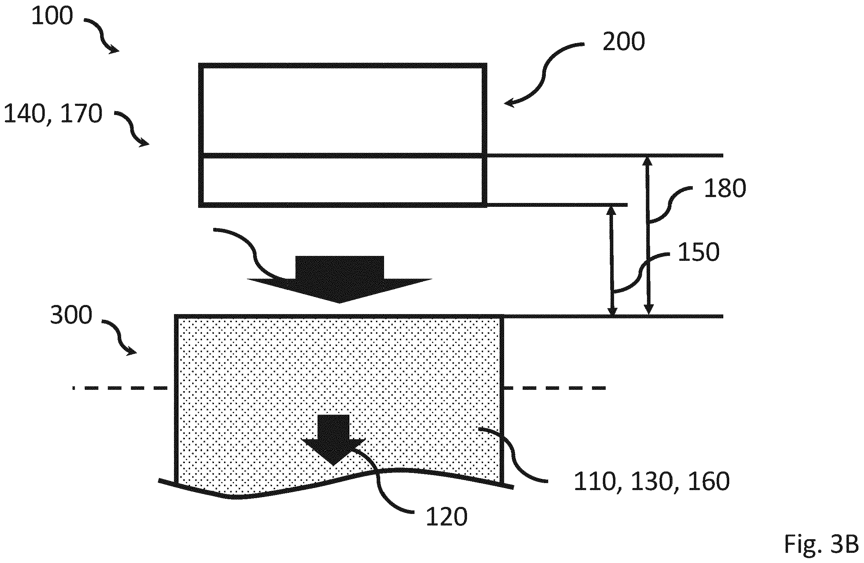

The first nozzle 140 is locatable at a first distance 150 from the conveyed substrate foil 110. The second nozzle 170 is locatable at a second distance 180 from the conveyed substrate foil 110. The second distance 180 is greater than the first distance 150. Each one of the nozzles may have the form of a slot die extending over the width of the substrate foil (cf. fig. 3B).

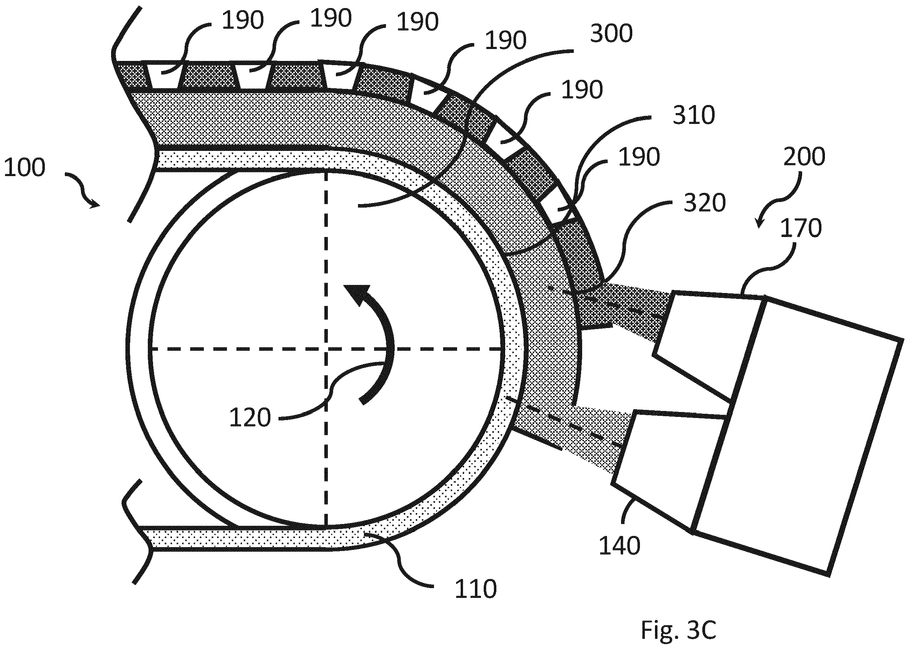

The second nozzle 170 is located behind the first nozzle 140 in a conveying direction 120. The second nozzle 170 has a lower flow rate of applied coating material than the first nozzle 140. For example, the second nozzle may be thinner (in a conveying direction 120), such that less coating material per time is ejected. Alternatively, or additionally, the system may be configured such that the second nozzle is supplied with less coating material per time (cf. fig. 3C).

After the application, the first coating layer 130 has a first thickness 145 and the second coating layer 160 has a second thickness 175. A slurry is used to form the first coating layer 130 and the second coating layer 160. The slurry comprises an active electrode coating material and other materials, such as a binder, a solvent, an additive and/or a conductive agent.

The application of the second coating layer 160 onto the first coating layer 130 results in an uneven and/or locally concentrated distribution of the second coating layer. In particular, the created uneven and/or locally concentrated distribution of the second coating layer can lead a structured arrangement of cavities 190 in the second coating layer 160 (schematically shown in fig. 1). When the second coating layer 160 reaches the first coating layer 130, the surface tension in the first coating layer 130 and/or second coating layer 160 might cause the structured arrangement of cavities 190 in the second coating layer 160.

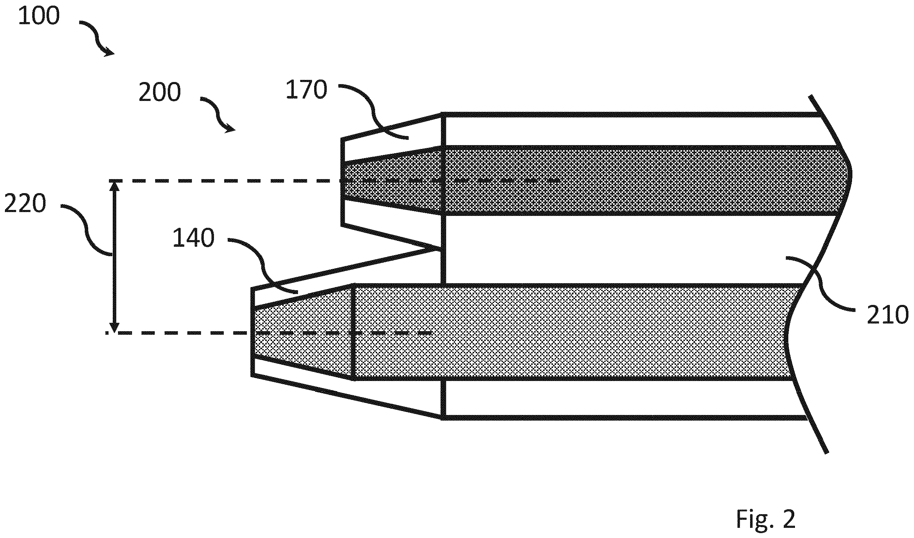

Fig. 2 schematically shows the system 100 with an applicator device 200 comprising a housing 210 enclosing the first nozzle 140 and the second nozzle 170 according to examples of the present disclosure.

The first nozzle 140 is spaced at a distance 220 of less than 10cm from the second nozzle 170. Moreover, in this example, the applicator device 200 is configured such that the first nozzle protrudes more than the second nozzles (in a direction, in which they eject coating material). I.e., the nozzles are offset in a direction, in which they eject coating material. Accordingly, even if the applicator device faces the substrate foil in a perpendicular manner (with regard to the ejection direction of coating material), the second nozzle is more distanced to the substrate foil.

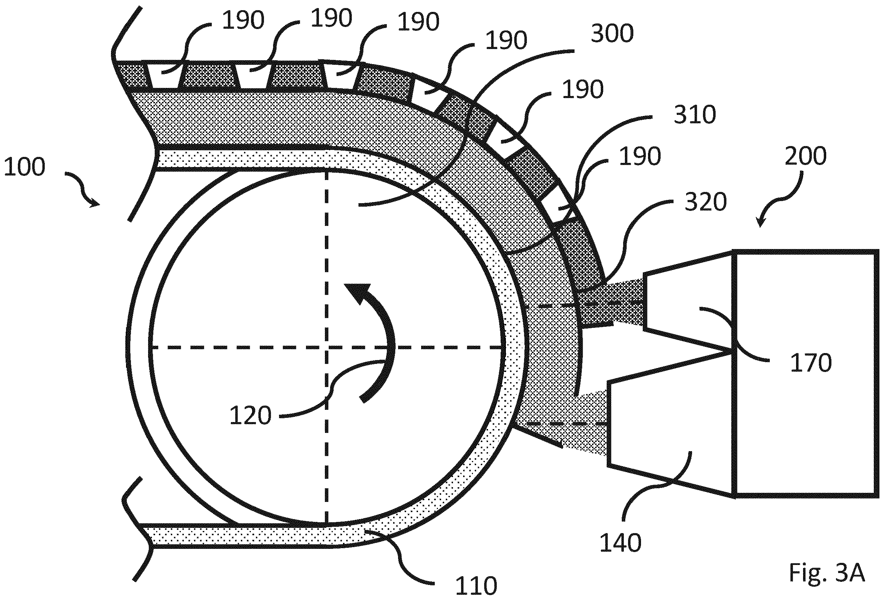

Fig. 3A schematically shows the system 100 for manufacturing an electrode comprising a roller 300 according to examples of the present disclosure (in particular using the applicator device of fig. 2).

The roller 300 may convey the substrate foil 120 and the layers applied onto the substrate foil 110 (i.e. the first coating layer 130 and the second coating layer 160) in a conveying direction 120. The first coating layer 130 and the second coating layer 160 may be applied by the applicator device 200 shown in Fig. 2. The applicator device may face the substrate foil in a substantially perpendicular manner (with regard to the ejection direction of coating material). The second nozzle is more distanced to the substrate foil.

The roller 300 is configured to deflect the substrate foil 110 to curve the surface 310 of the substrate foil 110 facing the first nozzle 140. The roller 300 is configured to deflect the substrate foil 110 to curve the surface 320 of the applied first coating layer 130 facing the second nozzle 170. The first nozzle 140 and the second nozzle 170 are arranged at a section along the conveying direction 120, whereof the roller is located.

Fig. 3B schematically shows the system 100 of Fig. 3A in a plan view according to examples of the present disclosure. As sown, both nozzles may have the same width (horizontal axis in fig. 3B). This width may be slightly smaller than the width of the substrate foil 110, in order to leave some uncoated areas for contact tables of the coated electrode.

Fig. 3C schematically shows a system 100, which is substantially similar to the system of fig. 3B, but comprising an inclined applicator device according to examples of the present disclosure. The applicator device 200 may comprise e.g. a conventional double slot die comprising a first nozzle 140 and a second nozzle 170. However, the applicator device 200 may be inclined with respect to the surface of the substrate foil 110 such that the first nozzle 140 is closer to or less distanced to the substrate foil 110 than the second nozzle 170. Moreover, the applicator device may be configured such that the second nozzle has a lower flow rate of applied coating material than the first nozzle. In particular, the system may be configured such that the second nozzle is supplied with less coating material per time und thus has a lower flow rate of coating material.

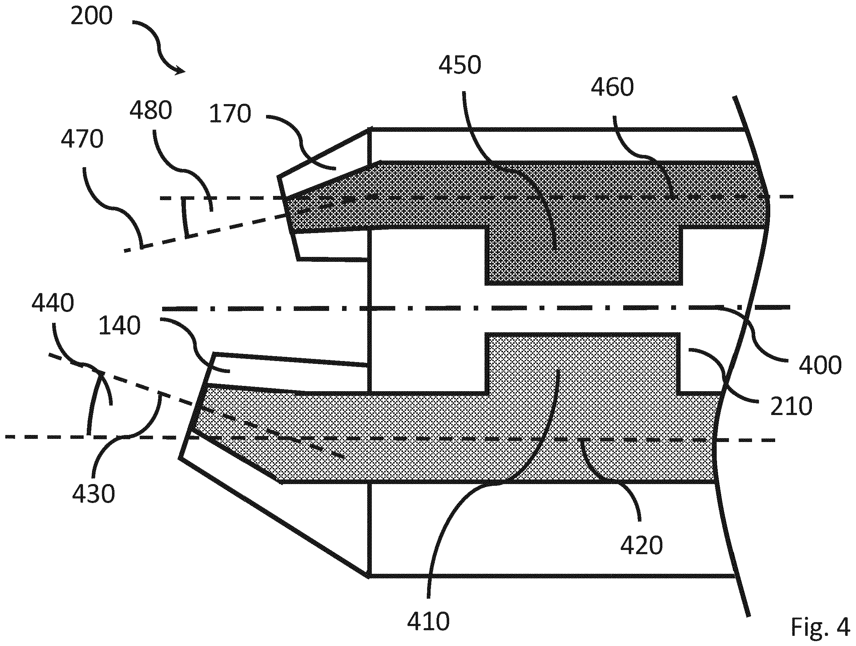

Fig. 4 schematically shows the applicator device 200 with the first nozzle 140 and the second nozzle 170 inward-facing according to examples of the present disclosure.

The applicator device has a body axis 400. The applicator device 200 comprises a first slurry reservoir 410 and a second slurry reservoirs 450.

The first coating material may be a slurry flowing from the first slurry reservoir 410 to the first nozzle 140 in a first flow direction 420. The first nozzle 140 may be inclined facing towards the body axis 400. An outflow angle 440 of the first nozzle 140 may be set between a first outflow direction 430 and the first flow direction 420 as they intersect. The second coating material may be a slurry flowing from the second slurry reservoir 450 to the second nozzle 170 in a second flow direction 460. The second nozzle 170 may be inclined facing towards the body axis 400. An outflow angle 480 of the second nozzle 170 may be set between a second outflow direction 470 and the second flow direction 460 as they intersect.

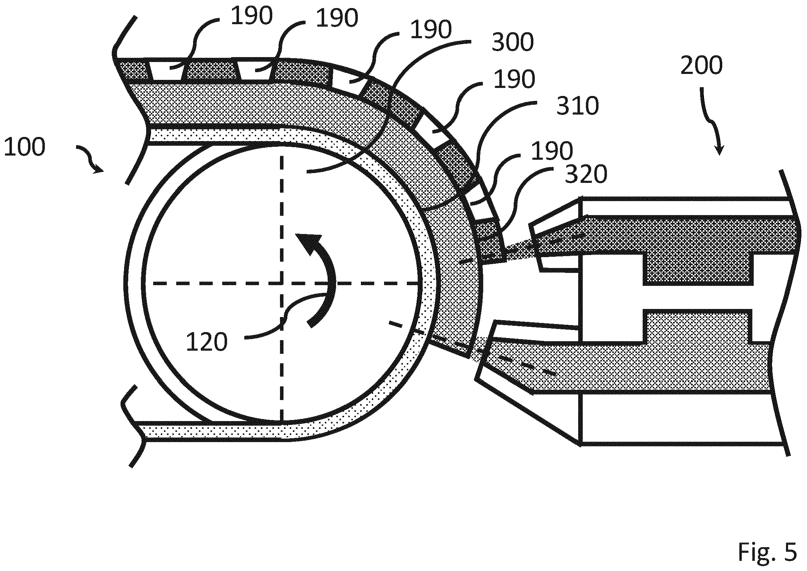

Fig. 5 schematically shows the system 100 with the applicator device 200 of Fig. 4 to examples of the present disclosure. As shown, due to the specific configuration of the applicator device 200, it does not need to be inclined, as it is the case in the example of fig. 4C. Moreover, the relative inclinations of the first and second nozzles may be adapted to the deflected substrate foil (deflected by the a roller 300), such that each nozzle faces perpendicularly the substrate foil.

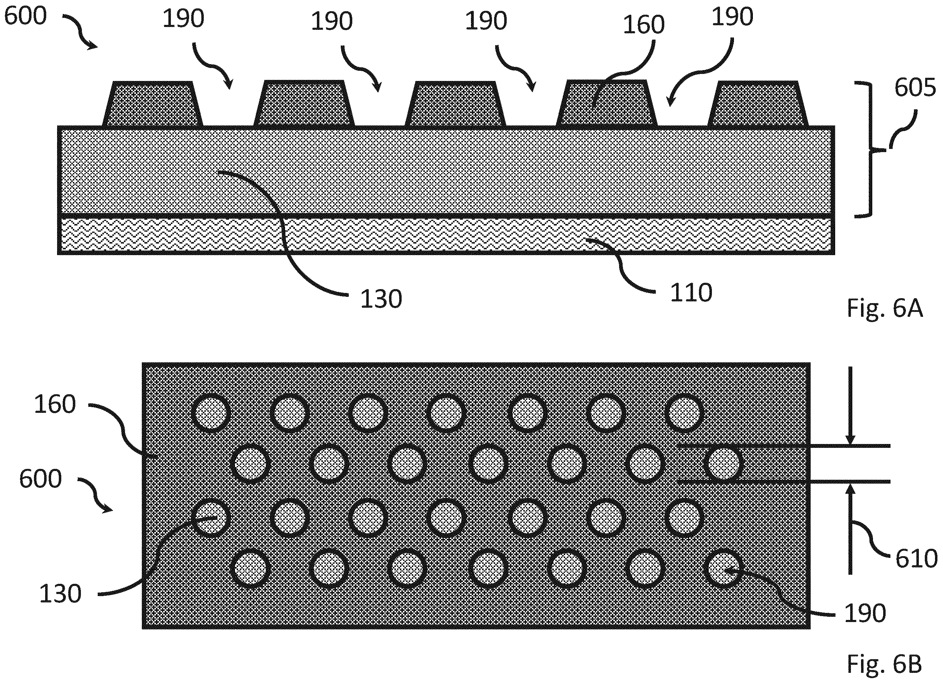

Fig. 6A shows a schematic drawing of a coated electrode 600 in a side view according to examples of the present disclosure. The coated electrode 600 may be manufactured using the system 100 according to examples of the present disclosure.

The coated electrode 600 comprises the substrate foil 110 and the top layer 605. The top layer 605 comprises the first coating layer 130 and the second coating layer 160. The one-side coated electrode 600 may serve as an anode in a lithium-ion. The substrate foil 110 may be a negative current collector. The substrate foil 110 may be a copper foil (typically 8

to 18 μm thick). As one example, the top layer 605 may comprise graphite (95% by weight) as the active material, carbon black (1% by weight) as the conductive additive, carboxymethyl cellulose (2% by weight) as the binder, and styrene-butadiene-rubber (2% by weight) as an additive. The substrate foil 110 has a thickness of about 10 μm and the top layer 605 has a thickness of about 80 μm in this example.

Fig. 6B shows a schematic drawing of a coated electrode 600 in a plan view according to examples of the present disclosure.

The cavities 190 may have a round cross-sectional area and a diameter - 610 of less than or equal to 200 μm, more preferably less than or equal to 100 μm and in certain variations, optionally less than or equal to 50 μm. Once the electrode 600 is incorporated into a battery, the cavities 190 have the potential to be filled with electrolyte. The cavities 190 might improve the overall integrity and performance of the electrode by potentially affecting conductivity, active material distribution, and the electrode's electrochemical properties.

For optimum performance of the electrode 600, it is desirable to have as many cavities 190 or small holes as possible. By adjusting the interface effects between the slurries and by adjusting the pump settings and slit nozzle parameters for the second coating layer 160. A good target value for the diameter of the cavities 190 or "defects" in the second coating layer 160 may be 50μm.

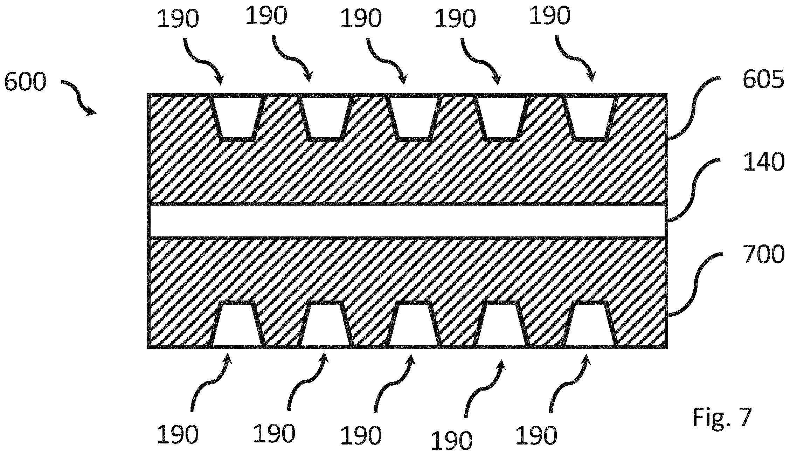

Fig. 7 shows a schematic drawing of a two-side coated electrode 600 according to examples of the present disclosure.

The two-side coated electrode 600 comprises a substrate foil 110, a top layer 605, and a bottom layer 700. In other words, top layer 605 and the bottom layer 700 may be positioned on both sides of the coated electrode 600. The preparation of the two-side coated electrode 600 may involve a sequential process where the substrate foil 110 is initially coated from the top side, followed by a step where the substrate foil 110 may be flipped, and the reverse side is subsequently coated from the top. Alternatively, the preparation of the two-side coated electrode 600 may involve the simultaneous coating from both the top and bottom of the substrate foil 110.

Both, the top layer 605 and the bottom layer 405 may comprise a first coating layer 130 and a second coating layer 160. The second coating layers 160 may comprise cavities 190 according to examples of the present disclosure.

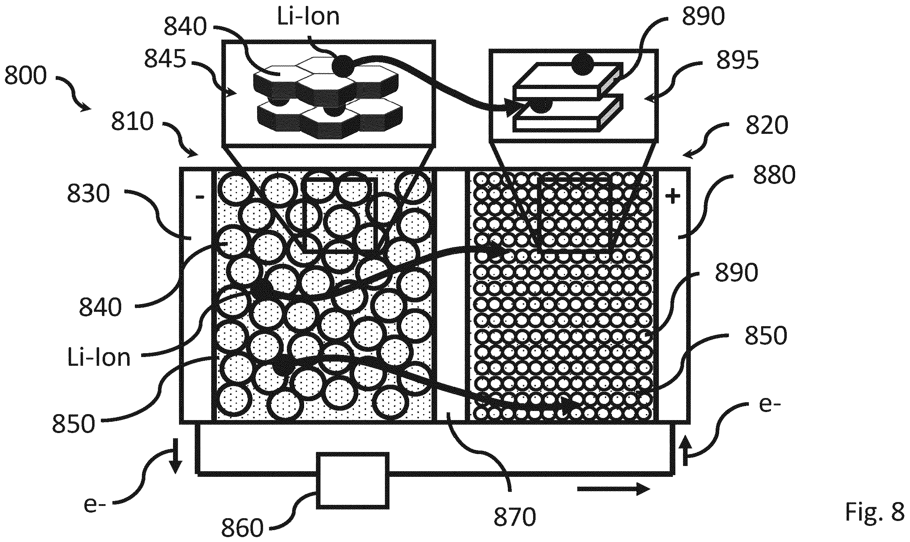

Fig. 8 shows a schematic drawing of a lithium-ion battery 800 during discharging with an anode 810 and a cathode 820 according to examples of the present disclosure. This example illustrates a basic scenario featuring two electrodes (anode 810 and cathode 820) to emphasize the roles of the components within the lithium-ion battery 800. However, it is widely acknowledged that multiple electrodes are typically stacked together to form a lithium-ion battery 800. Of course, a lithium-ion battery is only one possible use case of the coated electrodes of the present disclosure. The battery may comprise electrodes manufactured according the present disclosure. It is however generally noted that the electrodes manufactured according the present disclosure may be used also in other types of energy storage devices, such as capacitors.

The anode 810 or cathode 820 may be a coated electrode according to any examples of the present disclosure. For example, the anode 810 or cathode 820 may be a one-side coated electrode 600 according to examples of the present disclosure.

The lithium-ion battery 800 may be rechargeable. In case of discharging the lithium-ion battery 800, the positive electrode is called "cathode" and the negative electrode is called "anode". This terminology is different during the charging process, where the positive electrode may work as anode and the negative electrode may work as cathode.

The anode 810 comprises a first substrate 830 and a first active material 840. The first the substrate 830 may be a copper foil, typically 8 to 18 μm thick. The cathode 820 comprises a second substrate 880 and a second active material 890. The second substrate 880 may be an aluminum foil, typically 15 to 20 μm thick. The lithium-ion battery 800 may further comprise a separator 870 that is positioned between the first active material 840 and the second active material 890. The separator 870 may be a porous membrane to electrically isolate the anode 810 and the cathode 820 from each other.

The lithium-ion battery 800 further usually comprises an ion-conducting electrolyte 850 (e.g. containing a dissociated lithium conducting salt). The ion-conducting electrolyte 850 may wet the separator 870, the first active material 840 and the second active material 890 to enable a flow of ions between the anode 810 and the cathode 820.

The lithium-ion battery 800 is connected to a load 860. Loads may be any device or component that consumes electrical energy, such as electric motors, heaters, computers, industrial machinery, light bulbs or electronic devices.

During discharging of the lithium-ion battery 800, the lithium ions (Li-Ion) may migrate from the first active material 840 of the anode 810 through the electrolyte 850 and the separator 870 to the second active material 890 of the cathode 820. Simultaneously, electrons (e-), serving as carriers of electricity, migrate from the first substrate 830 of the anode 810 through an external electrical connection (a cable), powering the load 860, and reaching the second substrate 880 of the cathode 820.

During charging, the process may be reversed: Lithium ions (Li-Ion) migrate from the second active material 890 through the electrolyte 850 and the separator 870 to the first active material 840. Simultaneously, electrons generated from an external power source move may enter the anode 810 and may provide energy to force the lithium ions back to their original location within the first active material 840.

Close-up 845 provides a schematic depiction, offering a detailed view of the process within the first active material 840. Meanwhile, close-up 895 similarly schematically illustrates the process occurring within the second active material 890 in greater detail.

A common first active material 840 of an anode 810 may be graphitic carbon, which may have a layered structure of carbon atoms in graphene layers shown in the close-up 845. During charging, lithium ions may be intercalated between the layers, and during discharging, lithium leaves the graphite. Graphite may be stable even without lithium and can be almost completely discharged. For complete discharging, the reaction at the negative electrode is:

$$LiC_6 \rightarrow Li^+ + e^- + 6C$$

For every mole (7g) of active lithium, six moles (72g) of carbon may act as hosts during charging.

A traditional second active material 890 of a cathode 820 is, for example, lithiated cobalt oxide (LiCoO2). The active material 890 may have a layered structure comprising cobalt, oxygen, and lithium ion layers shown in the close-up 895. During charging, lithium leaves the crystal structure (deintercalation) and returns during discharging (intercalation), but only about 50% of the lithium may be utilized. If more than half leaves, it might cause structural collapse, releasing oxygen and potentially leading to thermal runaway. For complete discharging, the reaction at the positive electrode is:

$$2Li_{0.5}CoO_2 + Li^+ + e^- \rightarrow 2LiCoO_2$$

To achieve complete discharging, two moles (189g) of Li0.5CoO2 may be required for every mole (7g) of active lithium.

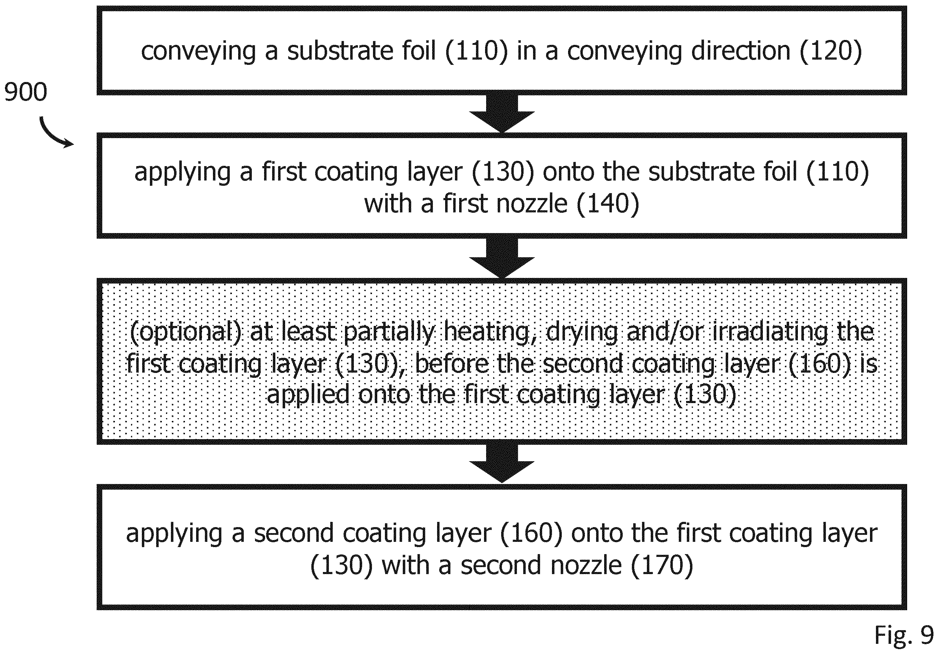

Fig. 9 schematically shows a method 900 of manufacturing an electrode 600 according to examples of the present disclosure.

In a first step, the substrate foil 110 may be conveyed in a conveying direction 120. In a second step, the first coating layer 130 may be applied onto the substrate foil 110 with a first nozzle 140. Optionally, the first coating layer 130 may be at least partially heated, dried and/or irradiated in a third step, before the second coating layer 160 is applied onto the first coating layer 130. In a fourth step, the second coating layer 160 may be applied onto the first coating layer 130 with the second nozzle 170.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular examples, it is to be understood that these examples are merely illustrative of the principles and applications of the present disclosure.

It is intended that the specification and examples be considered as exemplary only, with a true scope of the disclosure being indicated by the following claims.

A reference herein to a patent document or any other matter identified as prior art, is not to be taken as an admission that the document or other matter was known or that the information it contains was part of the common general knowledge as at the priority date of any of the claims.

**Claims**

1. A method (900) of manufacturing an electrode, the method (900) comprising:

   conveying a substrate foil (110) in a conveying direction (120),
   applying a first coating layer (130) onto the substrate foil (110) with a first nozzle (140), wherein the first nozzle (140) is located at a first distance (150) from the substrate foil (110), and
   applying a second coating layer (160) onto the first coating layer (130) with a second nozzle (170), wherein the second nozzle (170) is located at a second distance (180) from the substrate foil (110),
   wherein the second nozzle (170) is located behind the first nozzle (140) in a conveying direction (120) and wherein the second nozzle (170) has a lower flow rate of applied coating material than the first nozzle (140), and
   wherein the second distance (180) is greater than the first distance (150).

2. The method (900) according to claim 1, wherein

the first nozzle (140) is configured to apply the first coating layer (130) with a first thickness (145) and the second nozzle (170) is configured to apply the second coating layer (160) with a second thickness (175).

3. The method (900) according to claim 1 or 2, wherein
the first distance (150) is 1.1 to 2 times of the first thickness (145), and/or the second distance (180) corresponds to at least one of the following:

   • the sum of first thickness (145) and n times the first distance (150), n being more than 1, and
   • the sum of first thickness (145) and m times the second thickness (175), m being more than 1.1, in particular more than 2.

4. The method (900) according to any one of the preceding claims, wherein

   a surface (310) of the substrate foil (110) is curved when facing the first nozzle (140) and/or when the first coating layer (130) is applied, and/or
   a surface (320) of the applied first coating layer (130) is curved when facing the second nozzle (170) and/or when the second coating layer (160) is applied.

5. The method (900) according to the preceding claim, wherein
the surface (310, 320) of the substrate foil (110) or the applied first coating layer (130) is curved by deflecting the substrate foil (110) over a roller (300), wherein the first coating layer (130) and/or the second coating layer (160) is applied at a section along the conveying direction (120), where the roller (300) is located.

6. The method (900) according to any one of the preceding claims, wherein a slurry is used to form the first coating layer (130) and/or the second coating layer (160), wherein the slurry comprises an active electrode coating material and another material, such as a binder, a solvent, an additive and/or a conductive agent, wherein optionally
at least the slurry used for the second coating layer (160) further comprises ethanol for decreasing the surface tension of the first coating layer (130) or the second coating layer (160).

7. The method (900) according to any one of the preceding claims, wherein the first coating layer (130) and the second coating layer (160) are applied by a double slot die, the double slot die comprising the first nozzle (140) and the second nozzle (170), wherein the double slot die is positioned and inclined in relation to the substrate foil (110) such that the second distance (180) is greater than the first distance (150).

8. The method (900) according to any one of the preceding claims, further comprising:
at least partially heating, drying and/or irradiating the first coating layer (130), before the second coating layer (160) is applied onto the first coating layer (130).

9. The method (900) according to any one of the preceding claims, wherein the first coating layer (130) is at least partially in a liquid state when the second coating layer (160) is applied.

10. A system for manufacturing an electrode, the system comprising:

    a conveyor device configured to convey a substrate foil (110) in a conveying direction (120),
    a first nozzle (140) configured to apply a first coating layer (130) onto the substrate foil (110), wherein the first nozzle (140) is locatable at a first distance (150) from the conveyed substrate foil (110), and
    a second nozzle (170) configured to apply a second coating layer (160) onto the first coating layer (130), wherein the second nozzle (170) is locatable at a second distance (180) from the conveyed substrate foil (110), wherein the second nozzle (170) is located behind the first nozzle (140) in a conveying direction (120) and wherein the second nozzle (170) has a lower flow rate of applied coating material than the first nozzle (140), and wherein the second distance (180) is greater than the first distance (150).

11. The system according to the preceding system claim, further comprising:

    a roller (300) configured to deflect the substrate foil (110) to curve the surface (310, 320) of the substrate foil (110) facing the first nozzle (140) and/or the applied first coating layer (130) facing the second nozzle (170), wherein the first nozzle (140) and/or the second nozzle (170) are arranged at a section along the conveying direction (120), whereof the roller (300) is located.

**12.** The system according to any one of the preceding system claims, further comprising:
a radiation dryer positioned between the first nozzle (140) and the second nozzle (170), wherein the radiation dryer is configured to partially dry the first coating layer (130), in particular to dry a surface (310) of the first coating layer (130), before the second coating layer (160) is applied onto the first coating layer (130).

**13.** The system according to any one of the preceding system claims, further comprising:

an applicator device (200) comprising a housing enclosing the first nozzle (140) and the second nozzle (170), and/or
a double slot die comprising the first nozzle (140) and the second nozzle (170), wherein optionally
the applicator device (200) or the double slot die is positioned and inclined in relation to the conveyed substrate foil (110) such that the second distance (180) is greater than the first distance (150).

**14.** The system according to any one of the preceding system claims,
where the first nozzle (140) is spaced at a distance of less than 20cm, in particular less than 10cm or 5cm, from the second nozzle (170).

**15.** The system according to any one of the preceding system claims,

wherein the first nozzle (140) comprises a first nozzle opening and the second nozzle (170) comprises a second nozzle opening,
wherein the width of the first nozzle opening is substantially equal to the width of the second nozzle opening, and/or
wherein the width of the first nozzle or width of the second nozzle is substantially equal to the width of the substrate foil (110).

EP 4 571 864 A1

Fig. 1

Fig. 2

Fig. 3A

EP 4 571 864 A1

Fig. 3B

Fig. 3C

Fig. 4

Fig. 5

Fig. 6A

Fig. 6B

EP 4 571 864 A1

Fig. 7

Fig. 8

EP 4 571 864 A1

900

conveying a substrate foil (110) in a conveying direction (120)

applying a first coating layer (130) onto the substrate foil (110) with a first nozzle (140)

(optional) at least partially heating, drying and/or irradiating the first coating layer (130), before the second coating layer (160) is applied onto the first coating layer (130)

applying a second coating layer (160) onto the first coating layer (130) with a second nozzle (170)

Fig. 9

Europäisches
Patentamt

European
Patent Office

Office européen
des brevets

# EUROPEAN SEARCH REPORT

**Application Number**

EP 23 21 6959

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 599 796 B (DALIAN INST CHEM & PHYSICS CAS) 2 November 2021 (2021-11-02) | 1,2,6, 8-10,12 | INV. H01M4/04 |
| Y | * paragraphs [0001], [0011], [0013], [0015], [0018]; figure 1 * | 4,5,7, 11,13 | B05C5/02 B05D1/26 |
| A | | 3,14,15 | C23C14/56 H01M4/139 |
| | ----- | | H01M4/36 |
| Y | CN 105 531 865 A (HITACHI HIGH TECH CORP) 27 April 2016 (2016-04-27) * figure 9 * | 4,5,11 | |
| | ----- | | |
| Y | US 2006/057281 A1 (IZUMI SHINTARO [JP] ET AL) 16 March 2006 (2006-03-16) * paragraph [0161]; figure 2 * | 7,13 | |
| | ----- | | |

| | | | TECHNICAL FIELDS SEARCHED (IPC) |
|---|---|---|---|
| | | | H01M |

The present search report has been drawn up for all claims

| Place of search | Date of completion of the search | Examiner |
|---|---|---|
| Munich | 28 May 2024 | Lavorenti, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 6959

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2024

| Patent document cited in search report | Publication date | Patent family member(s) | Publication date |
|---|---|---|---|
| CN 112599796 B | 02-11-2021 | NONE | |
| CN 105531865 A | 27-04-2016 | CN 105531865 A | 27-04-2016 |
| | | KR 20160040651 A | 14-04-2016 |
| | | WO 2015045533 A1 | 02-04-2015 |
| US 2006057281 A1 | 16-03-2006 | CN 1685547 A | 19-10-2005 |
| | | JP WO2004012291 A1 | 24-11-2005 |
| | | US 2006057281 A1 | 16-03-2006 |
| | | WO 2004012291 A1 | 05-02-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20220263060 A1

- CN 111710833 B

### Non-patent literature cited in the description

- **KRIEGLER ; JOHANNES ; LUCAS HILLE ; SANDRO STOCK ; LUDWIG KRAFT ; JAN HAGEMEISTER ; JAN BERND HABEDANK ; ANDREAS JOSSEN ; MICHAEL F. ZAEH**. Enhanced performance and lifetime of lithium-ion batteries by laser structuring of graphite anodes. *Applied Energy*, 2021, vol. 303, 117693

- **DUNLAP ; NATHAN ; DANA B. SULAS-KERN ; PETER J. WEDDLE ; FRANCOIS USSEGLIO-VIRETTA ; PATRICK WALKER ; PAUL TODD ; DAVID BOONE et al.** Laser ablation for structuring Li-ion electrodes for fast charging and its impact on material properties, rate capability, Li plating, and wetting. *Journal of Power Sources*, 2022, vol. 537, 231464